# EUROPÄISCHE PATENTANMELDUNG

(11) **EP 0 632 108 A1**
(43) Veröffentlichungstag der Anmeldung: **04.01.1995**
(21) Anmeldenummer: 94109480.7
(22) Anmeldetag: 20.06.1994
(51) Int. Cl.: C09B 67/20

(54) **Pigmentzubereitungen mit Anthrachinonderivaten als Dispergiermittel**

(30) Priorität: 30.06.1993 DE 4321693
(71) Anmelder: BASF Aktiengesellschaft, D-67063 Ludwigshafen (DE)
(72) Erfinder: Hetzenegger, Josef, Dr., D-67227 Frankenthal (DE); Henning, Georg, Dr., D-67061 Ludwigshafen (DE); Zirnstein, Michael, Dr., D-69198 Schriesheim (DE)

(57) **Zusammenfassung**

Pigmentzubereitungen, enthaltend
(a) mindestens ein organisches Pigment;
(b) mindestens ein Anthrachinonderivat der allgemeinen Formel I 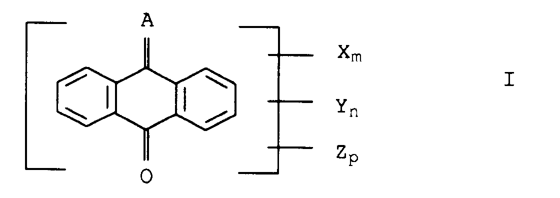 mit folgender Bedeutung der Variablen:
   - A: =O oder =NR¹;
   - X: Aminogruppierung -N(R³)₂;
   - Y: Säuregruppierung -SO₃^{⊖}Ka^{⊕} oder -CO₂^{⊖}Ka^{⊕};
   - Z: Halogen; C₁-C₃₀-Alkyl, -Alkoxy, -Alkylthio;
   C₃-C₃₀-Alkenyl, -Alkenyloxy; C₅-C₈-Cycloalkyl, -Cycloalkyloxy, -Cycloalkylthio; Phenyl, Phenoxy, Phenylthio;
   - m: 1 bis 4;
   - n: 1 bis 4;
   - p: 0 bis 6
   als Dispergiermittel;
(c) gewünschtenfalls weitere für Pigmentzubereitungen übliche Zusatzstoffe.

## Beschreibung

Die vorliegende Erfindung betrifft neue Pigmentzubereitungen, enthaltend
(a) mindestens ein organisches Pigment;
(b) mindestens ein Anthrachinonderivat der allgemeinen Formel I 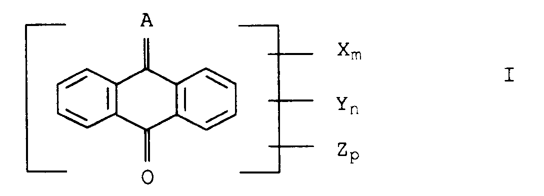 in der die Variablen folgende Bedeutung haben:
   - A: eine Gruppe =O oder =NR¹
   wobei R¹ folgende Bedeutung hat:
   Wasserstoff;
   C₁-C₃₀-Alkyl oder C₃-C₃₀-Alkenyl, dessen Kohlenstoffkette jeweils durch eine oder mehrere Gruppierungen -O-, -S- oder -NR²-, wobei R² Wasserstoff oder C₁-C₄-Alkyl bedeutet, unterbrochen sein kann und das jeweils durch C₁-C₆-Alkoxy, Amino, Halogen, Hydroxy und/oder Carboxy substituiert sein kann, wobei der Rest R¹ auch unter Ausbildung eines das Stickstoffatom und gegebenenfalls ein weiteres Heteroatom enthaltenden 5- oder 6-gliedrigen Ringes mit dem Anthrachinongerüst verknüpft sein kann;
   C₅-C₈-Cycloalkyl oder Phenyl, das jeweils durch C₁-C₆-Alkyl, C₁-C₆-Alkoxy, Amino, Halogen, Hydroxy und/oder Carboxy substituiert sein kann;
   - X: eine Gruppierung -N(R³)₂
   wobei die Reste R³ gleiche oder verschiedene der Reste R¹ bedeuten und die Alkyl- oder Alkenylreste R³ auch unter Ausbildung eines das Stickstoffatom und gegebenenfalls weitere Heteroatome enthaltenden 5- bis 7-gliedrigen Ringes miteinander verbunden sein können;
   - Y: eine Gruppierung -SO₃^{⊖}Ka^{⊕} oder-CO₂^{⊖}Ka^{⊕}
   wobei Ka^{⊕} folgende Bedeutung hat:
   H^{⊕} oder das Äquivalent eines Metallkations;
   ein Ammoniumkation -^{⊕}N(R⁴)₄
   wobei die Reste R⁴ gleiche oder verschiedene der Reste R¹ bedeuten und zwei der Alkyl- oder Alkenylreste R⁴ auch unter Ausbildung eines das Stickstoffatom und gegebenenfalls weitere Heteroatome enthaltenden, 5- bis 7-gliedrigen Ringes miteinander verbunden sein können;
   - Z: Halogen;
   einen der Alkyl- oder Alkenylreste R¹, die zusätzlich auch durch Phenyl oder C₅-C₈-Cycloalkyl substituiert sein können;
   einen der Phenylreste oder der unsubstituierten Cycloalkylreste R¹;
   C₁-C₃₀-Alkoxy oder -Alkylthio oder C₃-C₃₀-Alkenyloxy, dessen Kohlenstoffkette jeweils durch ein oder mehrere Gruppierungen -O-, -S- oder -NR²- unterbrochen sein kann und das jeweils durch C₁-C₆-Alkoxy, Amino, Hydroxy und/oder Carboxy substituiert sein kann;
   - m: 1 bis 4, wobei die Reste X für m > 1 gleich oder verschieden sein können;
   - n: 1 bis 4, wobei die Reste Y für n > 1 gleich oder verschieden sein können;
   - p: 0 bis 6, wobei die Reste Z für p > 1 gleich oder verschieden sein können,
   als Dispergiermittel;
(c) gewünschtenfalls weitere für Pigmentzubereitungen übliche Zusatzstoffe.

Weiterhin betrifft die Erfindung die Verwendung dieser Pigmentzubereitungen zum Pigmentieren von hochmolekularen organischen Materialien.

Die bei der Synthese und den verschiedenen Finishverfahren erhaltenen organischen Pigmente weisen bei der Einarbeitung in hochmolekulare organische Materialien vielfach Mängel auf. Ursache hierfür ist zum einen die schlechte Dispergierbarkeit der Pigmente und zum anderen die Unverträglichkeit der dispergierten Pigmente mit dem Anwendungsmedium. In Lacken und Druckfarben führt dies beispielsweise zu Einbußen in der Koloristik, z.B. Verminderung der Farbstärke und Veränderung des Farbtons und der Sättigung, Problemen in der Glanzgebung und zur Verschlechterung der rheologischen Eigenschaften. Bei Einarbeitung der Pigmente in Kunststoffteile beobachtet man neben einer Beeinträchtigung der der Koloristik zusätzlich Veränderungen der mechanischen Eigenschaften der Kunststoffteile.

Bekanntermaßen wird versucht, die anwendungstechnischen Eigenschaften der Pigmente durch Belegung mit Additiven zu verbessern. Neben farblosen, sowohl niedermolekularen als auch höhermolekularen Additiven werden in zunehmendem Maße auch Pigmentderivate, die teilweise ebenfalls farbig sind, eingesetzt. Beispielsweise sind aus der JP-A-141 456/1982 Anthrachinonderivate als Dispergiermittel für Pigmente bekannt, die jedoch keine reine Aminogruppe und Sulfonsäuregruppe enthalten.

Die Behandlung der Pigmente mit diesen Derivaten führt in vielen Fällen jedoch nicht zu einem zufriedenstellenden Ergebnis. So weisen vor allem hochpigmentierte Lacke nach wie vor Mängel im Fließverhalten und in der Koloristik auf, die auf eine unzureichende Stabilisierung der Pigmente im Bindemittel zurückzuführen sind.

Die Erfindung lag daher die Aufgabe zugrunde, Pigmentzubereitungen bereitzustellen, die günstige anwendungstechnische Eigenschaften aufweisen.

Demgemäß wurden die eingangs definierten Pigmentzubereitungen gefunden.

Weiterhin wurde die Verwendung dieser Pigmentzubereitungen zum Färben von hochpolymeren organischen Materialien gefunden.

Als Komponente (a) der erfindungsgemäßen Pigmentzubereitungen kommen alle organischen Pigmente in feinteiliger Form in Betracht. Geeignete Pigmentklassen sind beispielsweise Monoazo-, Disazo-, Anthrachinon-, Anthrapyrimidin-, Chinacridon, Chinophthalon-, Diketopyrrolopyrrol-, Dioxazin-, Flavanthron-, Indanthron-, Isoindolin-, Isoindolinon-, Isoviolanthron-, Perinon-, Perylen-, Phthalocyanin-, Pyranthron-, Triphenylmethan- und Thioindigopigmente sowie Metallkomplexe dieser Pigmente. Im einzelnen seien z.B. genannt:
- Monoazopigmente: C.I. Pigment Brown 25; C.I. Pigment Orange 5, 36 und 67;
   C.I. Pigment Red 3, 48:4, 52:2, 251, 112 und 170;
   C.I: Pigment Yellow 1, 3, 73, 74, 65, 97, 151 und 154;
- Disazopigmente: C.I. Pigment Red 144 und 166;
   C.I. Pigment Yellow 12, 17, 83 und 113;
- Anthrachinonpigmente: C.I. Pigment Yellow 147 und 177;
   C.I. Pigment Violet 31;
- Anthrapyrimidinpigmente: C.I. Pigment Yellow 108;
- Chinacridonpigmente: C.I. Pigment Red 122, 202 und 20;
   C.I. Pigment Violet 19;
- Chinophthalonpigmente: C.I. Pigment Yellow 138;
- Dioxazinpigmente: C.I. Pigment Violet 23 und 27;
- Flavanthronpigmente: C.I. Pigment Yellow 24;
- Indanthronpigmente: C.I. Pigment Blue 60 und 64;
- Isoindolinpigmente: C.I. Pigment Orange 69;
   C.I. Pigment Red 260;
   C.I. Pigment Yellow 139;
- Isoindolinonpigmente: C.I. Pigment Orange 61;
   C.I. Pigment Red 257;
   C.I. Pigment Yellow 109, 110 und 173;
- Perinonpigmente: C.I. Pigment Orange 43;
   C.I. Pigment Red 194;
- Perylenpigmente: C.I. Pigment Black 31;
   C.I. Pigment Red 123, 149, 178, 179, 190 und 224;
   C.I. Pigment Violet 29;
- Pyranthronpigmente: C.I. Pigment Orange 51;
   C.I. Pigment Red 216;
- Phthalocyaninpigmente: C.I. Pigment Blue 15, 15:1, 15:2, 15:3, 15:4, 15:6 und 16;
   C.I. Pigment Green 7 und 36;
- Triphenylmethanpigmente:C.I. Pigment Blue 61 und 62.

Bevorzugte Pigmente sind Anthrachinonpigmente wie C.I. Pigment Red 177, Chinacridonpigmente wie C.I. Pigment Violet 19, Indanthronpigmente wie C.I. Pigment Blue 60 und Perylenpigmente wie C.I. Pigment Red 149 und 179 und C.I. Pigment Violet 29.

Die als Komponente (b) in den erfindungsgemäßen Pigmentzubereitungen eingesetzten Anthrachinonderivate der Formel I sind bekannt, teilweise sogar im Handel erhältlich oder nach bekannten Methoden herzustellen. Die Sulfonsäurederivate können beispielsweise durch Sulfonierung von aminsubstituierten Anthrachinonen mit Schwefelsäure, Oleum oder Chlorsulfonsäure hergestellt werden, die Carbonsäurederivate sind beispielsweise durch Oxidation von alkylsubstituierten Anthrachinonen erhältlich.

Bevorzugte Komponenten (b) sind Anthrachinonderivate I, bei denen die Variable A Sauerstoff bedeutet. Daneben sind auch solche Derivate geeignet, bei denen A für eine Gruppe =NR¹ steht.

Dabei kann R¹ neben Wasserstoff folgende Bedeutungen haben:
- C₁-C₃₀-Alkylgruppen, bevorzugt C₁-C₁₈-Alkylgruppen, wobei die C-Kette dieser Gruppen durch eine oder mehrere Gruppierungen -O-, -S- oder -NR²- (R²: Wasserstoff, C₁-C₄-Alkyl) unterbrochen sein kann und diese Gruppen durch C₁-C₆-Alkoxy, Amino, Halogen wie Fluor, Brom und vor allem Chlor, Hydroxy und/oder Carboxy substituiert sein können; beispielsweise seien genannt:
   Methyl, Ethyl, Propyl, Isopropyl, Butyl, Isobutyl, sec.-Butyl, tert.-Butyl, Pentyl, Isopentyl, Neopentyl, tert.-Pentyl, Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl, 3,5,5,7-Tetramethylnonyl, Isotridecyl (die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436), Tetradecyl, Pentadecyl, Hexadecyl, Heptadecyl, Octadecyl, Nonadecyl, Eicosyl, Behenyl; 2-Methoxyethyl, 2-Ethoxyethyl, 2-Propoxyethyl, 2-Isopropoxyethyl, 2-Butoxyethyl, 2- und 3-Methoxypropyl, 2- und 3-Ethoxypropyl, 2- und 3-Propoxypropyl, 2- und 3-Butoxypropyl, 2- und 4-Methoxybutyl, 2- und 4-Ethoxybutyl, 2- und 4-Propoxybutyl, 2- und 4-Butoxybutyl, 3,6-Dioxaheptyl, 3,6-Dioxyoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,8-Trioxadecyl, 3,6,9-Trioxaundecyl, 3,6,9,12-Tetraoxatridecyl und 3,6,9,12-Tetraoxatetradecyl;
   2-Aminoethyl, 2- und 3-Aminopropyl, 2- und 4-Aminobutyl, 5-Aminopentyl und 6-Aminohexyl, 2-Chlorethyl, 4-Chlorbutyl, 6-Chlorhexyl und 4-Brombutyl, 2-Hydroxyethyl, 2- und 3-Hydroxypropyl, 2- und 4-Hydroxybutyl, 5-Hydroxypentyl, 6-Hydroxyhexyl, 7-Hydroxyheptyl und 8-Hydroxyoctyl, Carboxymethyl, 2-Carboxyethyl, 3-Carboxypropyl, 4-Carboxybutyl und 5-Carboxypentyl;
- C₃-C₃₀-Alkenylgruppen, bevorzugt C₃-C₁₈-Alkenylgruppen, deren C-Kette ebenfalls durch -O-, -S- oder -NR²- unterbrochen sein kann und die die bei den Alkylgruppen genannten Substituenten tragen können; z.B. sind zu nennen:
   1- und 2-Propenyl, 1-Methyl-2-propenyl, 1-,2- und 3-Butenyl, 1,3-Butadienyl, 1-,2-,3- und 4-Pentenyl und 1,3-, 1,4- und 2,4-Pentadienyl; 4-Methoxy-2-butenyl, 3-Chlor-2-propenyl, 4-Chlor-2-butenyl, 4-Hydroxy-2-butenyl und 4-Carboxy-2-tenyl;
- C₅-C₈-Cycloalkylgruppen, bevorzugt C₅-C₆-Cycloalkylgruppen, die durch C₁-C₆-Alkyl, C₁-C₆-Alkoxy, Amino, Halogen, Hydroxy und/oder Carboxy substituiert sein können; als Beispiele seien genannt: Cyclopentyl, Cyclohexyl, Cycloheptyl und Cyclooctyl; 3-Methylcyclopentyl, 4-Methyl-, 4-Ethylcyclohexyl, 4-Ethoxycylohexyl und 4-Chlorcyclohexyl;
- eine Phenylgruppe, die durch C₁-C₆-Alkyl, C₁-C₆-Alkoxy, Amino, Halogen, Hydroxy und/oder Carboxy substituiert sein kann;
   beispielhaft seien genannt:
   Phenyl; 2-, 3- und 4-Tolyl, Xylyl, 4-Methoxyphenyl, 4-Ethoxyphenyl und 4-Butoxyphenyl.

Der Rest R¹ kann auch unter Ausbildung eines das Stickstoffatom und gegebenenfalls weitere Heteroatome wie -O-, -S-, =N- oder -NH- enthaltenden Ringes mit dem Anthrachinongerüst verbunden sein. In Betracht kommen hier z.B. folgende Strukturen: 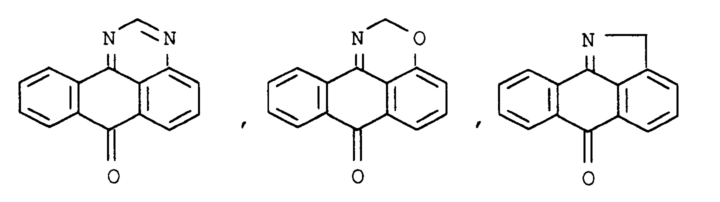
Der Rest X bedeutet eine Aminogruppe -N(R³)₂. Geeignete Reste R³ sind dabei die oben für R¹ aufgeführten Reste, wobei die gleichen Bevorzugungen gelten. Besonders bevorzugte Reste R³ sind Wasserstoff und C₁-C₄-Alkyl.

Die Reste R³ sind vorzugsweise gleich, können aber auch verschieden sein. Als Beispiele für bevorzugte Aminogruppen seien genannt:
-N(CH₃)₂, -N(C₂H₅)₂, -NH(CH₃), -NH(C₂H₅), -NH(C₃H₇), -NH(C₄H₉) und vor allem -NH₂.

Außerdem können die Alkyl- und/oder Alkenylreste R³ auch unter Ausbildung eines das Stickstoffatom und gegebenenfalls weitere Heteroatome wie -O-, -S-, =N- oder -NH- enthaltenden, 5- bis 7-gliedrigen Rings miteinander verbunden sein. Beispiele für solche Gruppen -N(R³)₂ sind Pyrryl, Pyridyl, Piperidyl, Morpholinyl, Pyrazolyl, Imidazolyl und Thiazolyl.

In der Regel enthalten die Anthrachinonderivate I 1 bis 4, bevorzugt 1 bis 3 und besonders bevorzugt 1 bis 2 Aminogruppen X.

Bevorzugte Positionen im Anthrachinongerüst für die Aminogruppen X sind die ortho-Stellungen.

Der Rest Y bedeutet eine Säuregruppierung -CO₂^{⊖}Ka^{⊕} und vor allem -SO₃^{⊖}Ka^{⊕}.

Bei der kationischen Gruppe Ka^{⊕} handelt es sich vorzugsweise um Wasserstoff. Ebenfalls geeignet sind Äquivalente von Metallkationen M^{q⊕}/q wie Lithium, Strontium, Mangan, Kupfer, Nickel, Kobalt, Chrom und vor allem Natrium, Kalium, Magnesium, Calcium, Barium, Zink, Eisen und Aluminium.

Weitere geeignete Gruppen Ka^{⊕} sind Ammoniumkationen -^{⊕}N(R⁴)₄, wobei die Reste R⁴ gleich oder verschieden sein können und die oben genannten Reste R¹ bedeuten, wobei C₁-C₁₈-Alkyl-, C₃-C₁₈-Alkenyl- und C₅-C₆-Cycloalkylgruppen bevorzugt sind. Auch hier können zwei der Alkyl- und/oder Alkenylreste R⁴ unter Ausbildung eines das Stickstoffatom und gegebenenfalls weitere Heteroatome wie -O-, -S-, =N- oder -NH- enthaltenden, 5- bis 7-gliedrigen Ringes miteinander verbunden sein.

Beispiele für bevorzugte Ammoniumkationen sind Mono- und Dimethylammonium-, Mono- und Diethylammonium-, Mono-n-hexyl-, -n-octyl-, -n-decyl-, -n-dodecyl-, -stearyl- und -oleylammonium-, Mono-cyclohexylammonium- sowie 3-Cyclohexylaminopropyl-, Talgalkyl- und 3-Talgalkylaminpropylammonium-Kationen (Duomeen®T, Akzo).

Als Beispiele für bevorzugte Säuregruppierungen Y sind neben -COOH vor allem -SO₂OH zu nennen.

In der Regel enthalten die Anthrachinonderivate I 1 bis 4, bevorzugt 1 bis 3 und besonders bevorzugt 1 Säuregruppe Y.

Die Säuregruppierungen Y besetzen vorzugsweise die peri-Stellungen des Anthrachinongerüstes.

Weiterhin können die Anthrachinonderivate I noch durch bis zu 6, insbesondere bis zu 2 Reste Z substituiert sein. Bevorzugt sind jedoch die Derivate I, die neben X und Y keine weiteren Substituenten tragen.

Geeignete Substituenten Z sind:
- insbesondere Halogenatome wie Fluor und Brom, vor allem Chlor;
- die für den Rest R¹ aufgeführten Alkyl- und Alkenylreste, die zusätzlich auch durch Phenyl oder C₅-C₈-Cycloalkyl substituiert sein können, wie Cyclohexylmethyl, Benzyl, 4-Tolylmethyl und Phenylethyl; bevorzugt sind C₁-C₄-Alkylgruppen;
- C₁-C₃₀-Alkoxygruppen, bevorzugt C₁-C₁₈, besonders bevorzugt C₁-C₄-Alkoxygruppen, deren C-Kette durch eine oder mehrere Gruppierungen -O-, -S- oder -NR²- unterbrochen sein kann und die durch Amino, Halogen, Hydroxy und/oder Carboxy substituiert sein können; beispielsweise seien genannt:
   Methoxy, Ethoxy, Propoxy, Isopropoxy, Butoxy, Isobutoxy, Pentyloxy, Hexyloxy, Heptyloxy, Octyloxy, 2-Ethylhexyloxy, Isooctyloxy, Nonyloxy, Isononyloxy, Decyloxy, Isodecyloxy, Undecyloxy, Dedecyloxy, Tridecyloxy, Isotridecyloxy, Tetradecyloxy, Pentadecyloxy, Hexadecyloxy, Heptadecyloxy, Octadecyloxy, Nonadecyloxy, Eicosyloxy, 2-Methoxyethoxy, 2-Ethoxyethoxy, 2-Propoxyethoxy, 2-Isopropoxyethoxy, 2-Butoxyethoxy, 2- und 3-Methoxypropoxy, 2- und 3-Ethoxypropoxy, 2- und 3-Propoxypropoxy, 2- und 3-Butoxypropoxy, 2- und 4-Methoxybutoxy, 2- und 4-Ethoxybutoxy, 2- und 4-Propoxybutoxy, 2- und 4-Butoxybutoxy, 3,6-Dioxaheptyloxy, 3,6-Dioxaoctyloxy, 4,8-Doxanonyloxy, 3,7-Dioxaoctyloxy, 3,7-Dooxanonyloxy, 4,7-Dioxaoctyloxy, 4,7-Dioxanonyloxy, 4,8-Doxadecyloxy, 3,6,8-Trioxadecyloxy, 3,6,9-Trioxaundecyloxy, 3,6,9,12-Tetraoxatridecyloxy und 3,6,9,12-Tetraoxatetradecyloxy;
- C₁-C₃₀-Alkylthiogruppen, bevorzugt C₁-C₄-Alkylthiogruppen, deren C-Kette ebenfalls durch eine oder mehrere Gruppierungen -O-, -S- oder -NR²- unterbrochen sein kann und die durch Amino, Halogen, Hydroxy und/oder Carboxy substituiert sein können; zum Beispiel sind zu nennen:
   Methylthio, Ethylthio, Propylthio, Isopropylthio, Butylthio, Pentylthio, Hexylthio, Nonylthio und 5-Butyltetradecylthio;
- C₃-C₃₀-Alkenyloxygruppen, bevorzugt C₃-C₁₈-Alkenyloxygruppen, deren C-Kette wie bei den entsprechenden aliphatischen Gruppen verändert sein kann und die die dort genannten Substituenten tragen können;
- C₅-C₈-Cycloalkyloxy- und -thiogruppen; beispielsweise seien genannt:
   Cyclopentyloxy, Cyclohexyloxy, Cyclopentylthio und Cyclohexylthio;
- eine Phenoxy- oder Phenylthiogruppe, die durch C₁-C₆-Alkyl, C₁-C₆-Alkoxy, Amino, Halogen, Hydroxy und/oder Carboxy substituiert sein kann; als Beispiele sind zu nennen:
   Phenoxy, 4-Methylphenoxy und Phenylthio.

Die Anthrachinonderivate I wirken als Dispergiermittel und werden in den erfindungsgemäßen Pigmentzubereitungen in Mengen eingesetzt, die sich an dem gewünschten Anwendungsprofil der Pigmentzubereitung orientieren. In der Regel werden, bezogen auf das Pigment (a), 0,1 bis 20 Gew.-%, vorzugsweise 0,2 bis 5 Gew.-% Dispergiermittel (b) verwendet.

Die erfindungsgemäßen Pigmentzubereitungen können je nach Anwendung noch weitere, für Pigmentzubereitungen übliche Zusatzstoffe (c) enthalten. Diese können beispielsweise zur Verbesserung der Pigmentbenetzung oder -dispergierung oder als Weichmacher oder Filmbildner dienen.

Übliche Zusätze sind zum Beispiel Harze und Harzsäuren, insbesondere auf der Basis von Kolophonium und modifiziertem Kolophonium, Tenside sowie im besonderen Polymere mit polaren Ankergruppen und Block-Copolymere.

Als Polymere sind insbesondere z.B. Polyolefine, Polyester, Polyether, Polyamide und Polyacrylate zu nennen. Beispiele für geeignete Ankergruppen sind Amin- und Ammoniumgruppen, Carbonsäure- und Carboxylatgruppen, Sulfonsäure- und Sulfonatgruppen und Phosphonsäure- und Phosphonatgruppen.

Bevorzugte Polymere sind solche mit stickstoffhaltigen Ankergruppen, vor allem Amin- und Polyalkylenimingruppen sowie Block-Copolymere mit Polyalkyleniminen wie Polyethyleniminen.

Derartige Zusatzstoffe (c) sind dem Fachmann bekannt. Sie sind zum großen Teil im Handel erhältlich (z.B. Solsperse®, ICI; Disperbyk®, Byk) und vielfach beschrieben, z.B. in Journal of Coatings Technology 58 (1986), 71, in Journal of Oil and Colour Chemical Association 1989, 293 und 1991, 204, in den DE-A-21 62 484, 22 64 176, 28 07 362 und 28 30 860 und in der EP-A-189 385.

Zweckmäßigerweise enthalten die erfindungsgemäßen Pigmentzubereitungen 50 bis 99,9 Gew.-% (a), 0,1 bis 20 Gew.-% (b) und 0 bis 30 Gew.-% (c), wobei ein Gehalt von 5 bis 20 Gew.-% der oben genannten, bevorzugten Polymere (c) besonders günstig ist.

Die Herstellung der erfindungsgemäßen Pigmentzubereitungen kann auf verschiedene Weise erfolgen. Die Zugabe des Dispergiermittels (b) (Anthrachinonderivate I) und gegebenenfalls der Zusatzstoffe (c) kann bereits bei der Pigmentsynthese oder während eines der üblichen Formierungsschritte wie Mahlung oder Finish oder auch erst bei der Einarbeitung des Pigments in das Anwendungsmedium erfolgen.

Das Dispergiermittel (b) kann dabei in fester oder in gelöster Form dem als Feststoff oder als Dispersion in Wasser oder einem organischen Lösungsmittel vorliegenden Pigment zugegeben werden. Handelt es sich bei dem Dispergiermittel um schwerlösliche Anthrachinonsalze (I), so können diese direkt als Feststoff zugesetzt werden. Man kann jedoch auch die freie Sulfon- oder Carbonsäure oder ein entsprechendes leichtlösliches Salz einsetzen und daraus durch nachfolgende Zugabe eines Metallsalzes, eines Amins oder einer Ammoniumverbindung das schwerlösliche Salz ausfällen.

Die erfindungsgemäßen Pigmentzubereitungen zeichnen sich durch gute Anwendungseigenschaften aus. Sie zeigen beispielsweise gute Dispergierbarkeit und Flockungsstabilität im Anwendungsmedium und gute rheologische Eigenschaften.

Die erfindungsgemäßen Pigmentzubereitungen eignen sich hervorragend zum Färben von hochmolekularen organischen Materialien. Insbesondere seien die Herstellung von Druckfarben und Lacken und die Pigmentierung von Kunststoffen genannt.

Beispiele für zu färbende Materialien sind: natürliche Harze; Kunstharze (Polymerisations- und Kondensationsharze) wie Alkydharze, Acrylharze, Epoxidharze, Aminoformaldehydharze wie Melamin- und Harnstoffharze; Celluloseether und -ester wie Ethylcellulose, Nitrocellulose, Celluloseacetat und -butyrat; Polyurethane; Polyvinylchloride; Chlorkautschuk; Polyolefine; Polyamide; Polyester; Epoxyester; Polycarbonate; Phenoplaste; Gummi; Casein; Silikon und Silikonharze sowie auch Mischungen der genannten Materialien.

Die hochmolekularen organischen Materialien können beim Färben als plastische Massen, Schmelzen, Lösungen, Emulsionen oder Dispersionen vorliegen. Bei der Lack- und Druckfarbenherstellung verwendet man bevorzugt Lösungen oder Dispersionen. Als Beispiele für bevorzugte Lacksysteme seien Alkyd/Melaminharzlacke, Acryl/Melaminharzlacke, Celluloseacetat/Cellulosebutyratlacke und Zweikomponentenlacke auf Basis mit Polyisocyanat vernetzbarer Acrylharze genannt.

### Beispiele

A. Herstellung von erfindungsgemäßen Pigmentzubereitungen
   1. Herstellung der Pigmente (a)
      C.I. Pigment Red 179 (Beispiele 1 bis 4):
      Eine Mischung aus 50 g Perylen-3,4,9,10-tetracarbonsäuredianhydrid (wasserfeucht) und 400 ml Wasser wurde zunächst durch Zugabe von 400 g Eis auf 0°C gekühlt, dann mit 50 ml 40 gew.-%iger wäßriger Methylaminlösung versetzt, anschließend 4 h bei 20°C und 3 h bei 80°C gerührt und zuletzt auf 60°C abgekühlt.
      Das feinteilige Pigment wurde abfiltriert, mit Wasser gewaschen und bei 80°C im Vakuum getrocknet.
      Bei der Herstellung der Pigmentzubereitung von Beispiel 1 wurde das Pigment nicht getrocknet, sondern direkt als wasserfeuchter Filterkuchen eingesetzt.
      C.I. Pigment-Violet 29 (Beispiel 5):
      Die Herstellung erfolgte analog durch Umsetzen von 30 g Perylen-3,4,9,10-tetracarbonsäuredianhydrid mit Ammoniak.
      C.I. Pigment Red 177 (Beispiel 6):
      Die Herstellung erfolgte analog Beispiel 1 der DE-A-12 05 215.
      C.I. Pigment Blue 60 (Beispiele 7 bis 9):
      30 g C.I. Pigment Blue 60 in der α-Modifikation (z.B. Paliogen® Blau L 6385) wurden mit 200 g Achatkugeln (0,5-2 cm Durchmesser) in einem 500 ml Achatgefäß in einer Planeten-Schnellmühle PM 4 der Fa. Retsch, Haan 10 h gemahlen.
      Das gemahlene Pigment wurde in 440 g 72 gew.-%ige Schwefelsäure eingetragen. Nach 4-stündigem Erhitzen auf 80°C wurde die Mischung auf 500 g Eis gegossen.
      Das Pigment wurde abfiltriert, mit Wasser neutralgewaschen und bei 80°C im Vakuum getrocknet.
   2. Herstellung der Polymere (c)
      Polymer (c1):
      Eine Mischung aus 33,9 einer 51 gew.-%igen wäßrigen Lösung eines Polyethylenimins (Molekulargewicht ca. 1300) und 228 g 6-Caprolacton wurde unter Abdestillieren von Wasser auf 160-170°C erhitzt und 6 h bei dieser Temperatur gehalten.
      Die Aminzahl des erhaltenen Polymers betrug 0,53 mg KOH/g.
      Polymer (c2) :
      Analog Beispiel 1 der DE-A-28 07 362 wurde 1 g 2-(Diethyl)-aminoethanol bei 150°C zunächst mit 10 g Ethylenoxid und dann mit 20 g Propylenoxid umgesetzt.
      Das mittlere Molekulargewicht des erhaltenen Polymers betrug 1700 g/mol.
   3. Herstellung der Pigmentzubereitungen
      Zur Herstellung der Pigmentzubereitung 1 wurde eine Mischung aus dem bei der Synthese anfallenden, wasserfeuchten Pigment (a) (Pigment Red 179: Wassergehalt etwa 60 Gew.-%), Dispergiermittel (b) und 400 ml Wasser 1 h bei 25°C gerührt. Nach Zugabe des Zusatzstoffes (c) wurde 1 h auf 80°C erhitzt. Nach Abkühlen auf 20°C wurde das Produkt abfiltriert, mit Wasser gewaschen und bei 80°C im Vakuum getrocknet.
      Bei der Herstellung der Pigmentzubereitungen 2 bis 4 sowie 7 bis 9 wurden die Komponenten (a), (b) und (c) in einer Reibschale sorgfältig miteinander verrieben.
      Die Herstellung der Pigmentzubereitungen 5 und 6 erfolgte durch 8-stündiges Mahlen der Komponenten (a), (b) und (c) mit 200 g Achatkugeln (0,5-2 cm Durchmesser) in einem 500 ml Achatgefäß in einer Planeten-Schnellmühle PM 4 der Fa. Retsch, Haan.
      Weitere Angaben zur Zusammensetzung der Pigmentzubereitungen sind der unten folgenden Tabelle zu entnehmen.
B. Beurteilung der rheologischen und koloristischen Eigenschaften
   Zur Beurteilung der rheologischen Eigenschaften wurden durch Anreiben des jeweiligen Pigments in einem Acryl/Melaminharzlack mit einem nichtflüchtigen Anteil von 47 % Buntlacke mit einem Pigmentgehalt von 13 Gew.-% hergestellt, die unmittelbar nach der Herstellung anhand folgender Skala bewertet wurden:
   1 gestockt
   2 leicht gestockt
   3 dickflüssig
   4 flüssig
   5 dünnflüssig
   Die zum Vergleich hergestellten, unbelegtes aber ansonsten analog behandeltes Pigment enthaltenden Buntlacke wurden durchweg mit Note 1 bewertet.
   Die weiteren Ergebnisse der rheologischen Beurteilung sind ebenfalls in der Tabelle aufgeführt.
   Zur Beurteilung der Koloristik wurden die Buntlacke mit einer 25 gew.-%igen TiO₂-Lackdispersion im Gewichtsverhältnis 1:4 gemischt und anschließend auf Karton abgerakelt.
   Die zum Vergleich hergestellten Aufrakelungen von unbehandeltes Pigment enthaltenden Lacken zeigten durchweg geringere Farbstärke, unreineren Farbton und geringere Farbsättigung als die unter Verwendung der erfindungsgemäßen Pigmentzubereitungen erhaltenen Aufrakelungen.

## Patentansprüche

1. Pigmentzubereitungen, enthaltend
(a) mindestens ein organisches Pigment;
(b) mindestens ein Anthrachinonderivat der allgemeinen Formel I 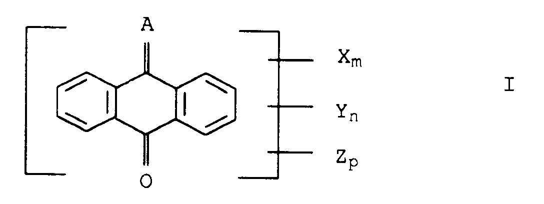 in der die Variablen folgende Bedeutung haben:
A eine Gruppe =O oder =NR¹
wobei R¹ folgende Bedeutung hat:
Wasserstoff;
C₁-C₃₀-Alkyl oder C₃-C₃₀-Alkenyl, dessen Kohlenstoffkette jeweils durch eine oder mehrere Gruppierungen -O-, -S- oder NR²-, wobei R² Wasserstoff oder C₁-C₄-Alkyl bedeutet, unterbrochen sein kann und das jeweils durch C₁-C₆-Alkoxy, Amino, Halogen, Hydroxy und/oder Carboxy substituiert sein kann, wobei der Rest R¹ auch unter Ausbildung eines das Stickstoffatom und gegebenenfalls ein weiteres Heteroatom enthaltenden 5- oder 6-gliedrigen Ringes mit dem Anthrachinongerüst verknüpft sein kann;
C₅-C₈-Cycloalkyl oder Phenyl, das jeweils durch C₁-C₆-Alkyl, C₁-C₆-Alkoxy, Amino, Halogen, Hydroxy und/oder Carboxy substituiert sein kann;
X eine Gruppierung -N(R³)₂
wobei die Reste R³ gleiche oder verschiedene der Reste R¹ bedeuten und die Alkyl- oder Alkenylreste R³ auch unter Ausbildung eines das Stickstoffatom und gegebenenfalls weitere Heteroatome enthaltenden 5- bis 7-gliedrigen Ringes miteinander verbunden sein können;
Y eine Gruppierung -SO₃^{⊖}Ka^{⊕} oder -CO₂^{⊖}Ka^{⊕}
wobei Ka^{⊕} folgende Bedeutung hat:
H^{⊕} oder das Äquivalent eines Metallkations;
ein Ammoniumkation -^{⊕}N(R⁴)₄
wobei die Reste R⁴ gleiche oder verschiedene der Reste R¹ bedeuten und zwei der Alkyl- oder Alkenylreste R⁴ auch unter Ausbildung eines das Stickstoffatom und gegebenenfalls weitere Heteroatome enthaltenden, 5- bis 7-gliedrigen Ringes miteinander verbunden sein können;
Z Halogen;
einen der Alkyl- oder Alkenylreste R¹, die zusätzlich auch durch Phenyl oder C₅-C₈-Cycloalkyl substituiert sein können;
einen der Phenylreste oder der unsubstituierten Cyclohexylreste R¹;
C₁-C₃₀-Alkoxy oder -Alkylthio oder C₃-C₃₀-Alkenyloxy, dessen Kohlenstoffkette jeweils durch ein oder mehrere Gruppierungen -O-, -S- oder -NR²- unterbrochen sein kann und das jeweils durch C₁-C₆-Alkoxy, Amino, Halogen, Hydroxy und/oder Carboxy substituiert sein kann;
m 1 bis 4, wobei die Reste X für m > 1 gleich oder verschieden sein können;
n 1 bis 4, wobei die Reste Y für n > 1 gleich oder verschieden sein können;
p 0 bis 6, wobei die Reste Z für p > 1 gleich oder verschieden sein können,
als Dispergiermittel;
(c) gewünschtenfalls weitere für Pigmentzubereitungen übliche Zusatzstoffe.

2. Pigmentzubereitungen nach Anspruch 1, die als Dispergiermittel ein Anthrachinonderivat der Formel I enthalten, in der die Variablen folgende Bedeutung haben:
A eine Gruppe =O;
X eine Gruppierung -N(R³)₂
wobei die Reste R³ gleich oder verschieden sind und Wasserstoff oder C₁-C₄-Alkyl bedeuten;
Y eine Gruppierung -SO₃^{⊖}Ka^{⊕}
wobei Ka^{⊕} folgende Bedeutung hat:
H^{⊕} oder das Äquivalent eines Natrium-, Kalium-, Magnesium-, Calcium-, Barium-, Zink-, Eisen- oder Aluminiumkations;
ein Ammoniumkation -^{⊕}N(R⁴)₄
wobei die Reste R⁴ gleiche oder verschiedene C₁-C₁₈-Alkyl-, C₃-C₁₈-Alkenyl- oder C₅-C₆-Cycloalkylreste bedeuten;
m 1 bis 3;
n 1 bis 3;
p 0.

3. Pigmentzubereitungen nach Anspruch 1 oder 2, die als Zusatzstoffe Polymere mit polaren Ankergruppen enthalten.

4. Pigmentzubereitungen nach Anspruch 3, die als Polymere Polyolefine, Polyester, Polyether, Polyamide und/oder Polyacrylate enthalten.

5. Pigmentzubereitungen nach Anspruch 3 oder 4, bei denen die polaren Ankergruppen der Polymere Amin-, Carbonsäure, Sulfonsäure- und/oder Phosphonsäuregruppen sind.

6. Pigmentzubereitungen nach den Ansprüchen 3 bis 5, bei denen die polaren Ankergruppen der Polymere Amingruppen sind.

7. Pigmentzubereitungen nach den Ansprüchen 1 bis 3, die
a) 50 bis 99,9 Gew.-% Pigment
b) 0,1 bis 20 Gew.-% Dispergiermittel und
c) 0 bis 30 Gew.-% übliche Zusatzstoffe
enthalten.

8. Verwendung der Pigmentzubereitungen gemäß den Ansprüchen 1 bis 7 zum Färben von hochmolekularen organischen Materialien.
